# EUROPÄISCHE PATENTSCHRIFT

(11) **EP 1 522 632 B1**
(45) Veröffentlichungstag und Bekanntmachung des Hinweises auf die Patenterteilung: **08.03.2006**
(21) Anmeldenummer: 04105768.8
(22) Anmeldetag: 24.11.2000
(51) Int. Cl.: E01C 19/42, E02B 3/12, B62D 11/20

(54) **Fahrschiff für eine Baumaschine, sowie Gleitschalungsfertiger mit einem solchen Fahrschiff**
Traveling device and slip form paver comprising such a traveling device
Dispositif roulant et finisseuse à coffrage glissant comprenant un tel dispositif roulant

(30) Priorität: 26.11.1999 DE 19957048
(43) Veröffentlichungstag der Anmeldung: 13.04.2005
(62) Teilanmeldung aus: 00125724.5
(73) Patentinhaber: WIRTGEN GmbH, 53578 Windhagen (DE)
(72) Erfinder: Smolders, Raymond, 2200, Herentals (BE); Thieme, Holger, 53560, Kalenborn (DE)
(74) Vertreter: Dallmeyer, Georg

(56) Entgegenhaltungen:
- EP-A- 1 039 037
- WO-A-98/05822
- US-A- 3 392 797
- US-A- 4 029 165

## Beschreibung

Die Erfindung betrifft ein Fahrschiff für eine Baumaschine nach dem Oberbegriff des Anspruchs 1, sowie einen Gleitschalungsfertiger nach dem Oberbegriff des Anspruchs 12.

Gleitschalungsfertiger werden benötigt, um beispielsweise Straßendecken aus Beton oder neben der Fahrbahn, Kanäle, Leitwände oder Wasserrinnen aus Beton herzustellen. Bekannte Gleitschalungsfertiger bestehen aus einem Maschinenrahmen mit einem Fahrgestell und mehreren Fahrschiffen aus lenkbaren Kettenlaufwerken und Hubsäulen besteht. Unterschiedliche Arbeitseinrichtungen zum Verteilen und Glätten oder Formen des Betons können an dem Maschinenrahmen befestigt werden.

Ein gattungsgemäßer Gleitschalungsfertiger ist beispielsweise aus der US 4 029 165 A oder der DE 198 14 052 A1 bekannt.

Der Erfindung liegt die Aufgabe zugrunde, ein Fahrschiff für eine Baumaschine, insbesondere für einen Gleitschalungsfertiger der eingangs genannten Art zu schaffen, dessen Manövrierfähigkeit verbessert ist.

Zur Lösung dieser Aufgabe dienen die Merkmale des Anspruchs 1 bzw. 12.

Die Erfindung sieht in vorteilhafter Weise vor, dass bei einem Fahrschiff für eine Baumaschine, mit einer Hubsäule für die Höhenverstellung und mit einem Kettenlaufwerk, das mit Hilfe eines Lenkgetriebes lenkbar ist, wobei die Hubsäule einen Hubsäulenflansch aufweist, das Lenkgetriebe zwei gebogene Lenker aufweist, die gelenkig über ein erstes Gelenk miteinander verbunden sind, wobei das freie Ende des ersten Lenkers mit einem zweiten relativ zur Hubsäule ortsfesten Gelenk an den Hubsäulenflansch angekoppelt ist, während das freie Ende des zweiten Lenkers über ein drittes Gelenk an einem Lenkring angekoppelt ist, der mit dem ausfahrbaren Teil der Hubsäule im Eingriff ist.

Die Baumaschine kann ein Gleitschalungsfertiger sein.

Zumindest die in Arbeitsrichtung vorderen Fahrschiffe weisen ein Lenkgetriebe zum Verschwenken der Kettenlaufwerke auf, wobei der aus der Mittellage in Arbeitsrichtung einstellbare Lenkwinkel einen Betrag von ± 50° bis 60°, vorzugsweise ± 75° überschreitet.

Ein solcher Lenkwinkel ermöglicht besonders enge Kurvenradien z.B. wenn beim Offset-Einbau mit einem Gleitschalungsfertiger die Offsetmulde rechts angebaut ist und der Bahnverlauf eine Linkskurve vorsieht. Dann muß der Gleitschalungsfertiger eine besonders enge Innenkurve ausführen.

Hierzu weist das Lenkgetriebe zwei vorzugsweise kreisförmig gebogene Lenker auf, die in einer Bewegungsebene bewegt werden, die orthogonal zur Achse der Hubsäule verläuft.

Insbesondere der Krümmungsradius der Lenker ist dem Durchmesser der Hubsäule für das Fahrschiff angepasst, so daß die Lenker in der einen Endposition des Lenkgetriebes die Hubsäule eng umschließen.

Das Lenkgetriebe weist als Stelleinrichtung eine Kolben-Zylindereinheit mit einem Zylindergehäuse und einer in dem Zylindergehäuse linear beweglichen Kolbenstange auf.

Jeweils ein Ende der beiden Lenker ist über ein gemeinsames Gelenk an dem freien Ende der Kolbenstange miteinander gekoppelt, während das andere Ende des ersten Lenkers an einem zu dem Fahrschiff ortsfesten zweiten Gelenk und das andere Ende des zweiten Lenkers an einem zu dem Kettenlaufwerk ortsfesten dritten Gelenk angekoppelt sind.

Das Zylindergehäuse der Kolben-Zylindereinheit ist um eine parallel zur Achse der Hubsäule verlaufende Achse schwenkbar auf an einem zu der Hubsäule bzw. dem Fahrschiff ortsfesten Teil gelagert.

Im folgenden wird unter Bezugnahme auf die Zeichnungen ein Ausführungsbeispiel der Erfindung näher erläutert:

Es zeigen:
- Fig. 1: eine Draufsicht auf einen Gleitschalungsfertiger,

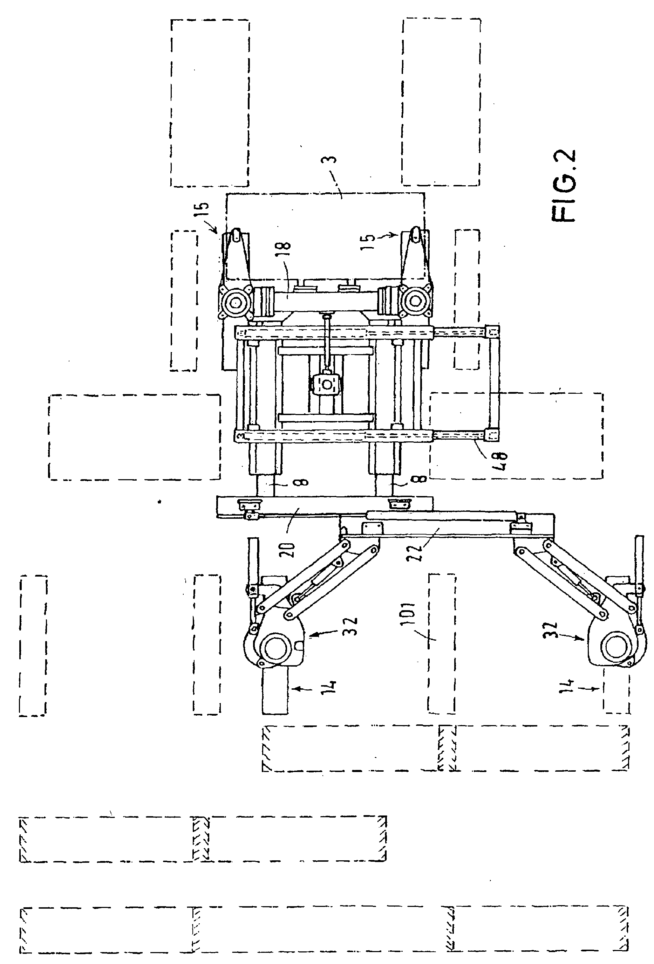

- Fig. 2: eine Draufsicht gemäß Fig. 1, in der die Einstellbereiche für die Spurlage der Fahrschiffe angegeben sind,

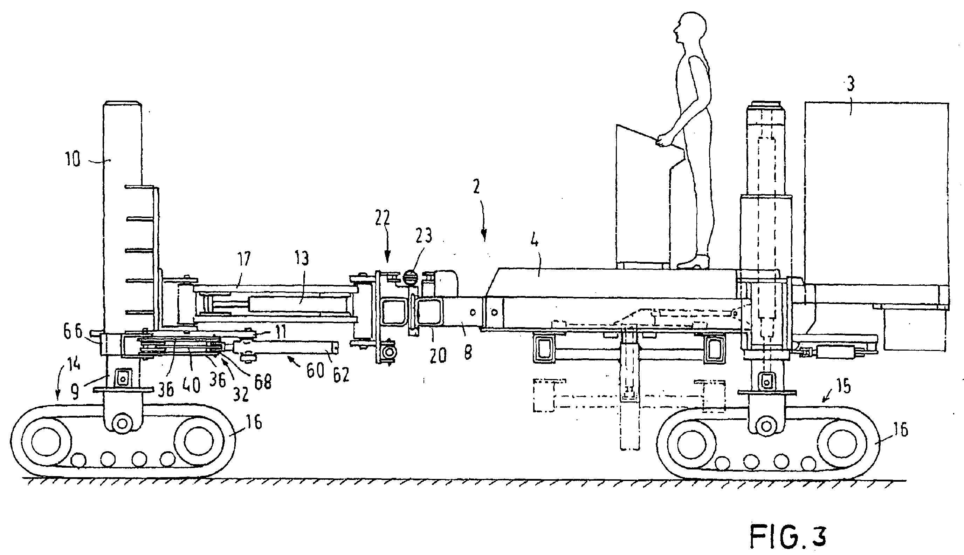

- Fig. 3: eine Seitenansicht des Gleitschalungsfertigers ohne Fördereinrichtung,
- Fig. 4: ein Lenkgetriebe für die Kettenlaufwerke, und
- Fign. 5a, 5b: unterschiedliche Lenkpositionen des Lenkgetriebes.

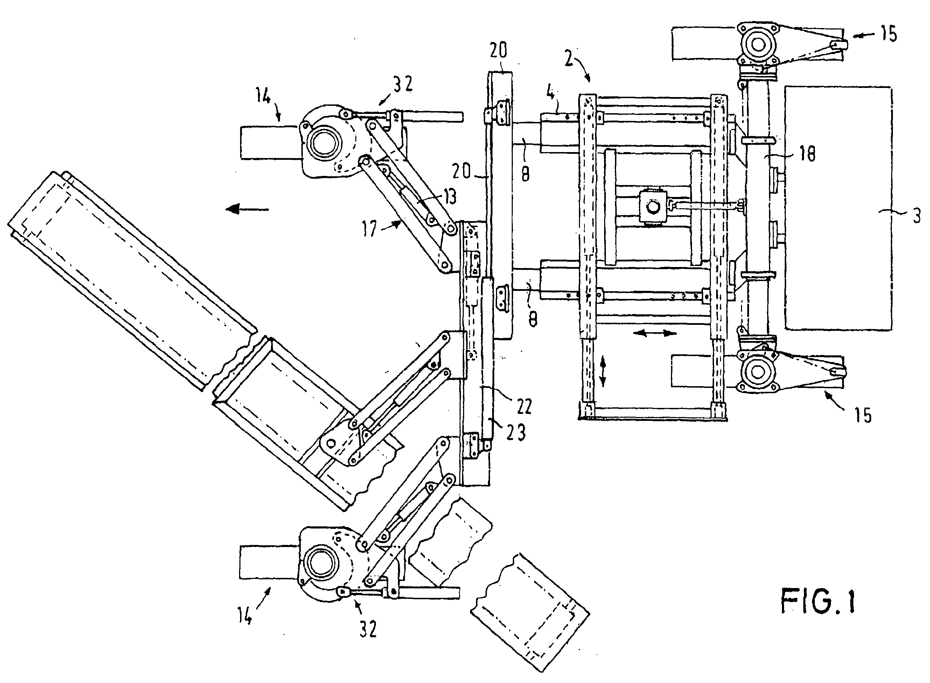

Der Gleitschalungsfertiger weist, wie aus Fig. 1 ersichtlich ist, ein Fahrgestell 2 auf, das aus einem Maschinenrahmen 4 mit parallel zur Arbeitsrichtung verlaufenden, aus dem Maschinenrahmen 4 teleskopierbaren Längsträgern 8 und aus quer zur Arbeitsrichtung verlaufenden Querträgern 18,20 besteht. Die Arbeitsrichtung ist in Fig. 1 mit einem Pfeil gekennzeichnet. Der in Arbeitsrichtung hintere Querträger 18 ist mit dem Maschinenrahmen 4 starr verbunden und nimmt in zwei vertikal zueinander versetzten Ebenen hintere Fahrschiffe 15 auf, die quer zur Arbeitsrichtung aus dem Querträger 18 teleskopierbar sind. In Arbeitsrichtung hinter dem Querträger 18 ist eine Antriebseinheit 3 mit dem Maschinenrahmen 4 verbunden, die eine hydraulische Antriebsleistung für den Vortrieb und für die Stelleinrichtungen des Gleitschalungsfertigers liefert.

Der in Arbeitrichtung vordere Querträger 20 ist mit den teleskopierbaren Längsträgern 8 starr verbunden, die aus dem Maschinenrahmen 4 heraus in Arbeitsrichtung teleskopierbar sind, um bei Bedarf den Abstand zwischen den vorderen Fahrschiffen 14 und den hinteren Fahrschiffen 15 zu verändern und somit die Gesamtlänge des Gleitschalungsfertigers zu verändern. Der Maschinenrahmen 4 bzw. die Längsträger 8 benötigen hierzu keine Stelleinrichtung, da das Verlängern bzw. Verkürzen des Maschinenrahmens allein mit Hilfe der Fahrschiffe 14,15 erfolgen kann. Eine Sicherungskette oder ein Sicherungsseil zwischen dem hinteren Querträger 18 und dem vorderen Querträger 20 kann ein zu weites Teleskopieren der Längsträger 8 verhindern. Befinden sich die Längsträger 8 in der richtigen Position, werden Sie mit Hilfe von Bolzen in dem Maschinenrahmen 4 gesichert.

An dem in Arbeitsrichtung vorderen Querträger 20 ist eine Schiebetraverse 22 angeordnet, die mit Hilfe einer Kolben-Zylindereinheit 23 parallel zum Querträger 20 verschiebbar ist.

An der Schiebetraverse 22 sind an ihren äußeren Enden die vorderen Fahrschiffe 14 mit Hilfe jeweils einer parallelogrammartigen Schwenkeinrichtung 17 angelenkt. Die Schwenkeinrichtungen 17 mit zugehörigen Kolben-Zylindereinheiten 13 erlauben die Einstellung unterschiedlicher Spurweiten zwischen den beiden vorderen Fahrschiffen 14, während mit Hilfe der Schiebetraverse 22 die Spurlage variiert werden kann.

Während die hinteren Fahrschiffe mit einem herkömmlichen Lenkgetriebe versehen sind, weisen die vorderen Fahrschiffe 14 ein Lenkgetriebe 32 auf, das einen Lenkeinschlag aus der Mittellage in Arbeitsrichtung von mehr als ± 75° erlaubt. Jedes Fahrschiff 14 besteht aus einer Hubsäule 10 auf der orthogonal zum Maschinenrahmen 4 ein Kettenlaufwerk 16 nach unten ausfahrbar ist. Der ausfahrbare Teil 9 der Hubsäule 10 wird dabei von einem Lenkring 66 umgeben, der von dem Lenkgetriebe 32 betätigt wird.

Das Lenkgetriebe 32 besteht aus einer Kolben-Zylindereinheit 60 mit einem Zylindergehäuse 62 und einer Kolbenstange 64, die auf mindestens zwei kreisförmig gebogenen Lenker 36,40 einwirkt. Das Zylindergehäuse 62 ist dabei um eine orthogonal zu dem Maschinenrahmen 4 verlaufende Achse 63 gelenkig an einem mit der Hubsäule 10 verbundenen Hubsäulenflansch 11 gelagert. Das Schwenkgelenk 61 befindet sich dabei an dem der Kolbenstange 64 zugewandten Ende des Zylindergehäuses 62. An dem freien Ende der Kolbenstange 64 ist ein erstes Gelenk 68 vorgesehen, das den mit dem Lenkring 66 verbundenen Lenker 40, den Kopf der Kolbenstange 64 und das eine Ende des Lenkers 36 miteinander gelenkig verbindet. Der Lenker 36 kann in doppelter Anordnung vorgesehen sein, wobei der Lenker 40 in dem Gelenk 68 zwischen den Lenkern 36 angeordnet ist. Das freie Ende der Lenker 36 ist mit einem zweiten relativ zur Hubsäule 10 ortsfesten Gelenk 72 an dem Hubsäulenflansch 11 befestigt, während das freie Ende des Lenkers 40 über ein drittes Gelenk 76 an den Lenkring 66 angekoppelt ist. Das Lenkgetriebe 32 wird in einer orthogonal zur Achse der Hubsäule 10 verlaufenden Ebene bewegt.

Der Lenkring 66 weist zwei diametral gegenüberliegende Nutensteine 67 auf, die in einer Nut am Innenumfang des Lenkrings 66 angeordnet sind, radial nach innen vorstehen, und in entsprechende Längsnuten 65 des unteren Teils 9 der Hubsäule 10 eingreifen. Damit wird eine Lenkung des Kettenlaufwerks 16 unabhängig von der Höheneinstellung des Kettenlaufwerks 16 ermöglicht.

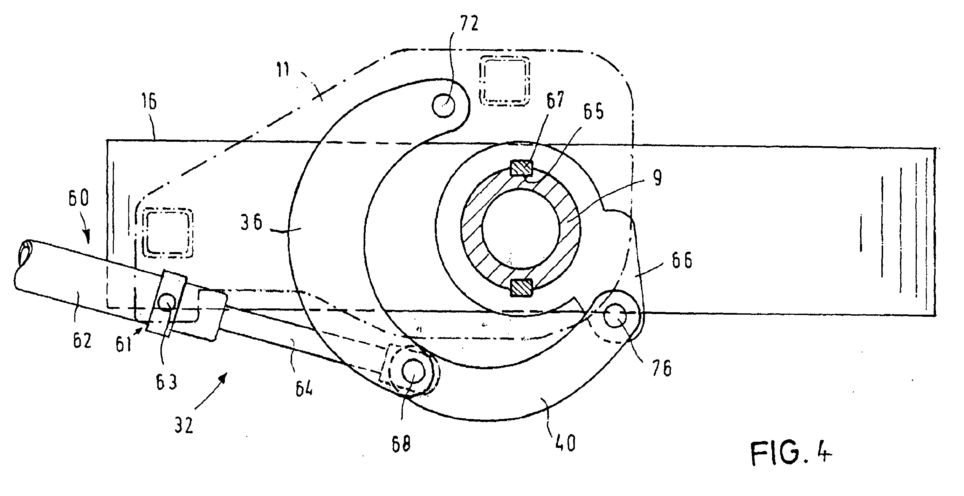

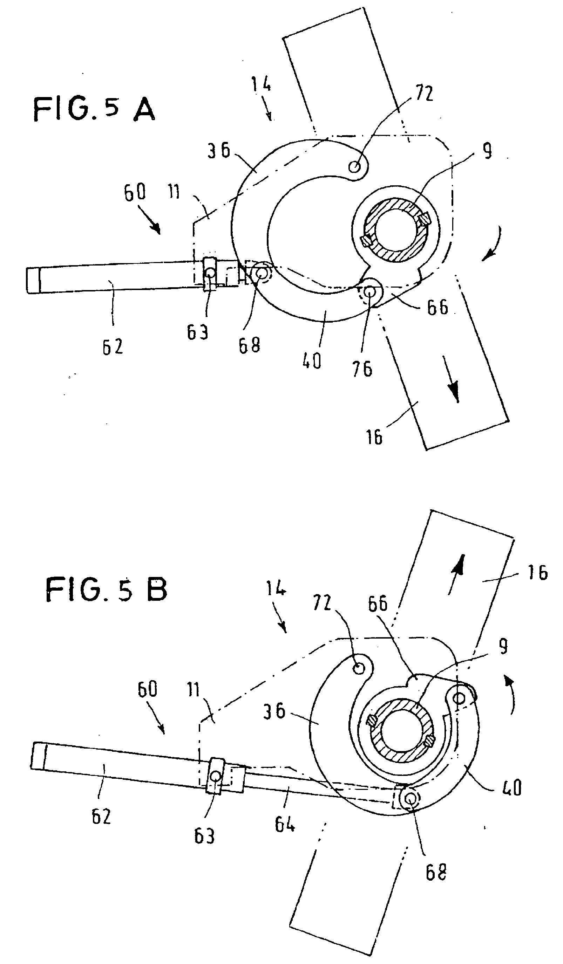

Die Fign. 4,5a,5b zeigen unterschiedliche Positionen des Lenkgetriebes 32 und den entsprechend eingestellten Lenkeinschlag des Kettenlaufwerkes 16.

Fig. 4 zeigt die Mittellage bei Geradeausfahrt parallel zu den Längsträgern 8 des Maschinenrahmens 4.

Fig. 5a zeigt einen Lenkeinschlag des Kettenlaufwerks 16 nach rechts, wobei die kreisförmig gebogenen Lenker 36,40 den unteren Teil 9 der Hubsäule eng umschließen. Die Kolbenstange 64 befindet sich dabei in ihrer eingefahrenen Position.

Fig. 5b zeigt einen Lenkeinschlag nach links, in der sich die Kolbenstange 64 in ihrer ausgefahrenen Position befindet. Die Fign. verdeutlichen den in Relation zu üblichen Lenkeinschlägen von ± 25° bis 30° erweiterten Lenkeinschlagswinkel. Der Gleitschalungsfertiger ist aufgrund der nunmehr in einem erheblich weiteren Bereich einstellbaren Lenkwinkel einfacher zu lenken und besser manövrierfähig aufgrund der möglichen engen Kurvenradien sowohl beim Umsetzen des Gleitschalungsfertigers als auch im Betrieb.

## Patentansprüche

1. Fahrschiff für eine Baumaschine, mit einer Hubsäule (10) für die Höhenverstellung, mit einem Lenkgetriebe (32) und mit einem Kettenlaufwerk (16), das mit Hilfe des Lenkgetriebes (32) lenkbar ist, wobei die Hubsäule (10) einen Hubsäulenflansch (11) aufweist,
**dadurch gekennzeichnet,**
**dass** das Lenkgetriebe (32) zwei gebogene Lenker (36,40) aufweist, die gelenkig über ein erstes Gelenk (68) miteinander verbunden sind, wobei das freie Ende des ersten Lenkers (36) mit einem zweiten relativ zur Hubsäule (10) ortsfesten Gelenk (72) an den Hubsäulenflansch (11) angekoppelt ist, während das freie Ende des zweiten Lenkers (40) über ein drittes Gelenk (76) an einem Lenkring (66) angekoppelt ist, der mit dem ausfahrbaren Teil (9) der Hubsäule (10) im Eingriff ist.

2. Fahrschiff nach Anspruch 1, **dadurch gekennzeichnet, dass** der aus der Mittellage einstellbare Lenkwinkel des Lenkgetriebes (32) einen Betrag von ± 50° bis 60°, vorzugsweise ± 75°, überschreitet.

3. Fahrschiff nach Anspruch 1 oder 2, **dadurch gekennzeichnet, dass** die Bewegungsebene der Lenker (36,40) orthogonal zur Achse der Hubsäule (10) verläuft.

4. Fahrschiff nach einem der Ansprüche 1 bis 3, **dadurch gekennzeichnet, dass** der Krümmungsradius der Lenker (36,40) dem Durchmesser der Hubsäule (10) für das Fahrschiff (14) angepasst ist.

5. Fahrschiff nach einem der Ansprüche 1 bis 4, **dadurch gekennzeichnet, dass** das Lenkgetriebe (32) als Stelleinrichtung eine Kolben-Zylindereinheit (60) mit einem Zylindergehäuse (62) und einer in dem Zylindergehäuse (62) linear beweglichen Kolbenstange (64) aufweist.

6. Fahrschiff nach Anspruch 5, **dadurch gekennzeichnet, dass** jeweils ein Ende der beiden Lenker (36,40) über das gemeinsame erste Gelenk (68) an dem freien Ende der Kolbenstange (64) miteinander gekoppelt sind.

7. Fahrschiff nach Anspruch 5 oder 6, **dadurch gekennzeichnet, dass** das Zylindergehäuse (62) der Kolben-Zylindereinheit (60) schwenkbar um eine, in eingebauten Zustand des Fahrschiffes, orthogonal zur Ebene des Baumaschinenrahmens (4) verlaufende Achse (63) an einem Teil (11) der Hubsäule (10) gelagert ist.

8. Fahrschiff nach einem der Ansprüche 5 bis 7, **dadurch gekennzeichnet, dass** die Kolben-Zylindereinheit (60) schwenkbar an dem Hubsäulenflansch (11) gelagert ist.

9. Fahrschiff nach einem der Ansprüche 1 bis 7, **dadurch gekennzeichnet, dass** der Lenkring (66) über Nutensteine (67), die in Längsnuten (65) des ausfahrbaren Teils (9) der Hubsäule (10) eingreifen, unabhängig von der Höheneinstellung des Kettenlaufwerks (16) mit der Hubsäule (10) im Eingriff ist.

10. Fahrschiff nach einem der Ansprüche 1 bis 9, **dadurch gekennzeichnet, dass** das Fahrschiff (14) über eine Schwenkeinrichtung (17) an der Baumaschine anlenkbar ist.

11. Fahrschiff nach Anspruch 10, **dadurch** gekenneichnet, dass die Schwenkeinrichtung (17) aus parallelogrammartig angeordneten Lenkern besteht, die von einer Kolben-Zylindereinheit (13) antreibbar sind.

12. Gleitschalungsfertiger mit einem Maschinenrahmen (4) mit parallel zur Arbeitsrichtung verlaufenden Längsträgern (8) sowie mit Querträgern (18,20) und mit inem Fahrgestell (2) bestehend aus mehreren mit einer Hubsäule (10) höhenverstellbaren Fahrschiffen (14,15) mit lenkbaren Kettenlaufwerken (16), die die Ebene des Maschinenrahmens (4) in einer vorgegebenen Lage halten, **gekennzeichnet durch** Fahrschiffe (14,15) nach einem der Ansprüche 1 bis 11.

## Claims

1. A truck assembly for a construction machine, comprising a lifting column (10) for height adjustment, a steering gear (32) and a track (16) which is steerable by means of the steering gear (32), the lifting column (10) being provided with a lifting column flange (11),
**characterized in**
**that** the steering gear (32) comprises two curved links (36,40) articulated to each other via a first joint (68), the free end of the first link (36) being coupled to the lifting column flange (11) by means of a second joint (72) arranged in a fixed position relative to the lifting column (10), and the free end of the second link (40) being coupled via a third joint (76) to a steering ring (66) engaging the extendable portion (9) of the lifting column (10).

2. The truck assembly according to claim 1, **characterized in that** the steering angle of the steering gear (32), adjustable from an intermediate position, exceeds an amount of ± 50° to 60°, preferably ± 75°.

3. The truck assembly according to claim 1 or 2, **characterized in that** the moving plane of the links (36,40) extends orthogonally to the axis of the lifting column (10).

4. The truck assembly according to any one of claims 1 to 3, **characterized in that** the radius of curvature of the links (36,40) is adapted to the diameter of the lifting column (10) for the truck assembly (14).

5. The truck assembly according to any one of claims 1 to 4, **characterized in that** the steering gear (32) comprises, as an adjustment means, a piston/cylinder unit (60) including a cylinder housing (62) and a piston rod (64) arranged for linear movement in the cylinder housing (62).

6. The truck assembly according to claim 5, **characterized in that** respectively one end of the two links (36,40) is coupled to the other end via the common first joint (68) on the free end of the piston rod (64).

7. The truck assembly according to claim 5 or 6, **characterized in that** the cylinder housing (62) of the piston/cylinder unit (60) is supported to a portion (11) of the lifting column (10) for pivoting movement about an axis (63) which in the mounted condition of the truck assembly extends orthogonally to the plane of the construction machine frame.

8. The truck assembly according to any one of claims 5 to 7, **characterized in that** the piston/cylinder unit (60) is articulated to the lifting column flange (11).

9. The truck assembly according to any one of claims 1 to 7, **characterized in that** the steering ring (66) is in engagement with the lifting column (10) independently of the height adjustment of the track (16) via groove-guided blocks (67) engaging longitudinal grooves (65) of the extendable portion (9) of the lifting column (10).

10. The truck assembly according to any one of claims 1 to 9, **characterized in that** the truck assembly (14) is adapted to be articulated to the construction machine via a pivoting means (17).

11. The truck assembly according to claim 10, **characterized in that** the pivoting means (17) comprises links arranged in the configuration of a parallelogram and being drivable by a piston/cylinder unit (13).

12. A slip-form paver comprising a machine frame (4) including longitudinal beams (8) extending in parallel to the working direction, and transverse beams (18,20), and comprising a chassis (2) including a plurality of truck assemblies (14,15) adjustable in height by means of a lifting column (10) and provided with steerable tracks (16) maintaining the plane of the machine frame (4) in a predetermined position, **characterized by** truck assemblies (14,15) according to any one of claims 1 to 11.

## Revendications

1. Mécanisme de roulement pour un engin de construction comportant une colonne de levage (10) pour le réglage en hauteur, un organe de direction (32) et un train de roulement à chaîne (16) qui peut être articulé au moyen de l'organe de direction (32), la colonne de levage (10) comportant une bride de colonne de levage (11),
**caractérisé en ce que** :
l'organe de direction (32) comporte deux bras incurvés (36, 40) qui sont reliés entre eux de façon articulée par une première articulation (68), l'extrémité libre du premier bras (36) étant couplée à la bride de colonne de levage (11) par une deuxième articulation (72) fixe par rapport à la colonne de levage (10), tandis que l'extrémité libre du deuxième bras (40) est couplée par une troisième articulation (76) à une bague de direction (66) qui est en engagement avec la partie extensible (9) de la colonne de levage (10).

2. Mécanisme de roulement selon la revendication 1, **caractérisé en ce que** l'angle de direction de l'organe de direction (32), réglable depuis la position médiane par référence à la direction de travail, est supérieur à une valeur ± 50° à 60°, avantageusement ± 75°.

3. Mécanisme de roulement selon la revendication 1 ou 2, **caractérisé en ce que** le plan de déplacement des bras (36, 40) s'étend orthogonalement à l'axe de la colonne de levage (10).

4. Mécanisme de roulement selon l'une des revendications 1 à 3, **caractérisé en ce que** le rayon de courbure des bras (36, 40) est adapté au diamètre de la colonne de levage (10) pour le mécanisme de roulement (14).

5. Mécanisme de roulement selon l'une des revendications 1 à 4, **caractérisé en ce que** l'organe de direction (32) comporte comme dispositif de réglage une unité à piston et cylindre (60) comportant un boîtier de cylindre (62) et une tige de piston (64) mobile linéairement dans le boîtier de cylindre (32).

6. Mécanisme de roulement selon la revendication 5, **caractérisé en ce que** des premières extrémités des deux bras (36, 40) sont couplées entre elles, par une articulation (68) commune, à l'extrémité libre de la tige de piston (64).

7. Mécanisme de roulement selon la revendication 5 ou 6, **caractérisé en ce que** le boîtier de cylindre (62) de l'unité de piston et cylindre (60) est monté sur une partie (11) de la colonne de levage (10) de manière à pouvoir pivoter autour d'un axe s'étendant, lorsque le mécanisme de roulement est escamoté, orthogonalement au plan du bâti (4).

8. Mécanisme de roulement selon l'une des revendications 5 à 7, **caractérisé en ce que** l'unité de piston et cylindre (60) est monté sur la bride de colonne de levage (11) de manière à pouvoir pivoter.

9. Mécanisme de roulement selon l'une des revendications 1 à 7, **caractérisé en ce que** la bague de direction (66) s'engage avec la colonne de levage (10) par des coulisseaux (67),qui s'engagent dans des gorges longitudinales (65) de la partie extensible (9) de la colonne de levage (10), indépendamment du réglage en hauteur du train de roulement à chaîne (16).

10. Mécanisme de roulement selon l'une des revendications 1 à 9, **caractérisé en ce que** le mécanisme de roulement (14) est monté de façon articulée sur l'engin au moyen d'un dispositif pivotant (17).

11. Mécanisme de roulement selon la revendication 10, **caractérisé en ce que** le dispositif pivotant (17) est constitué de deux bras, disposés en parallélogramme, qui peuvent être entraînés par une unité de piston et cylindre (13).

12. Finisseur à coffrage glissant comprenant un bâti (4) qui comporte des longerons (8) s'étendant parallèlement à la direction de travail ainsi que des traverses (18, 20) et un châssis (2) constitué de plusieurs mécanismes de roulement (14, 15), réglables en hauteur au moyen d'une colonne de levage (10), qui comportent des trains de roulement à chaîne (16) qui peuvent être dirigés et qui maintiennent le plan du bâti (4) dans une position prédéterminée, **caractérisé par** des mécanismes de roulement (14, 15) selon l'une des revendications 1 à 11.
